# FASCICULE DE BREVET EUROPEEN

(11) **EP 2 459 362 B1**
(45) Date de publication et mention de la délivrance du brevet: **08.04.2015**
(21) Numéro de dépôt: 10752888.7
(22) Date de dépôt: 28.07.2010
(51) Int. Cl.: B29C 70/08

(54) **PROCEDE DE REALISATION D'UNE AME AVEC FIBRES DE PONTAGE INTEGREES POUR PANNEAUX EN MATERIAUX COMPOSITES, PANNEAU OBTENU ET DISPOSITIF**
VERFAHREN ZUR HERSTELLUNGEINES KERN MIT VERBINDENDEN FASERN FÜR VERBUNDMATERIAL, VERBUND MATERIAL UND VORRICHTUNG
PROCESS TO PRODUCE A CORE WITH BRIDGING FIBERS FOR COMPOSITE MATERIAL, COMPOSITE MATERIAL AND APPARATUS

(30) Priorité: 28.07.2009 FR 0955260
(43) Date de publication de la demande: 06.06.2012
(73) Titulaire: Saertex France, 38510 Arandon (FR)
(72) Inventeur: KLETHI, Thierry, F-01300 Saint Benoit (FR); PINAN, Frédéric, Mooresville North Carolina NC 28117 (US)
(74) Mandataire: Fantin, Laurent
(86) Numéro de dépôt international: PCT/FR2010/051601
(87) Numéro de publication internationale: WO 2011/015770

(56) Documents cités:
- EP-A1- 0 611 741
- EP-A1- 0 822 062
- EP-A1- 1 686 210

## Description

La présente invention concerne un procédé de réalisation d'une âme avec fibres de pontage intégrées pour la fabrication de panneaux composites.

L'invention couvre aussi le panneau obtenu ainsi que le dispositif pour le réaliser. Ces panneaux sont constitués de façon connue d'une âme en matériau léger du type mousse, âme de part et d'autre de laquelle sont rapportées deux peaux. Ces peaux sont solidaires de chacune des faces de l'âme. Ce sont les peaux qui confèrent les propriétés mécaniques au panneau, du fait de l'augmentation du moment d'inertie par espacement de ces deux peaux.

Chacune des peaux est solidarisée à l'âme.

L'industrie est à la recherche de panneaux en matériau composite à capacités mécaniques améliorées par suppression des effets limiteurs de ces propriétés engendrés par le délaminage et par la rupture à coeur de l'âme.

Il faut donc utiliser des matériaux compatibles pour réaliser cette liaison et compenser les piètres propriétés mécaniques de l'âme.

En effet, chaque peau est réalisée à partir d'un mat de fibres noyées dans une résine.

Il faut prévoir la compatibilité entre la résine utilisée comme matrice et ladite mousse.

Néanmoins, les panneaux ainsi obtenus présentent des propriétés mécaniques qui restent limitées et qu'il est possible d'augmenter très significativement.

En effet, on constate sous certains efforts, notamment de flexion, un délaminage d'une des peaux par désolidarisation de cette peau d'avec l'âme.

De fait, pour augmenter la résistance au délaminage et profiter pleinement de la résistance complète du panneau il a été imaginé des perfectionnements.

C'est ainsi qu'il est connu de réaliser des ponts entre les deux peaux.

Ces ponts ont été réalisés par des trous ménagés dans l'âme de façon à ce que la résine coule à travers ces trous lors de la réalisation des peaux.

Néanmoins, si ceci est un perfectionnement, l'amélioration des performances mécaniques reste insuffisante.

De ce fait, il a été imaginé de lier les peaux à l'âme en faisant passer des fibres de l'une au moins des peaux à travers l'âme soit de façon traversante si une des peaux est concernée soit partiellement traversante ou totalement traversante si les deux peaux sont concernées.

Ainsi, la résine peut migrer le long des fibres partiellement ou totalement traversantes et former ainsi des ponts entre les deux peaux qui sont ainsi, eux-mêmes, des ponts en matériau composite.

Le brevet européen EP 1 686 210 décrit un panneau composite qui comprend ainsi une âme avec deux peaux fibreuses, ces peaux fibreuses étant reliées à l'âme par une matière liante solidifiée et des fibres de liaison originaires de l'une au moins des peaux ont été enfoncées, en particulier perpendiculairement, dans le volume intercalaire entre les peaux donc dans l'âme.

Ce document décrit aussi un dispositif qui permet de réaliser, en continu et simultanément, une peau de chaque côté d'une âme et de faire pénétrer une partie des fibres de ces peaux à travers l'âme de façon traversante ou non, par aiguilletage.

La demande de brevet français FR 2 921 076 décrit un perfectionnement du brevet mentionné ci-avant.

Cette demande prévoit que, au moins une partie des fibres de liaison enfoncées à partir de l'une au moins des deux peaux, présentent au moins une orientation oblique par rapport à l'une au moins des deux peaux.

Ainsi, les deux peaux sont liées entre elles par des ponts constitués de fibres issues de ces deux peaux.

L'inconvénient de tels panneaux est le choix des fibres. En effet, on comprend que les fibres qui constituent les peaux ne sont pas nécessairement adaptées pour un autre usage à savoir la migration de résine et le "pontage" des peaux.

En effet, la nature, le diamètre, la longueur, le type des fibres constituant les peaux ne génère pas des propriétés mécaniques suffisantes ou un pouvoir de migration suffisamment rapide pour ne citer que les paramètres essentiels. Enfin, non seulement les fibres sont d'un type unique mais l'aiguilletage peut s'avérer non adapté lorsque l'épaisseur de chacune des peaux varie ou la densité. Les combinaisons sont donc très limitées.

Or il existe une demande pour des produits à forte résistance mécanique, des besoins pour des vitesses élevées de réalisation des panneaux, si bien que le pouvoir migrant des résines doit aussi être amélioré.

Les cadences sont importantes mais la diversité des besoins également si bien qu'il serait intéressant de pouvoir disposer d'âmes préparées d'un côté et de peaux préparées à l'avance ou réalisées in situ mais autorisant ainsi de nombreuses combinaisons.

C'est un des objets de la présente invention, entre autres, de proposer un procédé de réalisation d'une âme incluant des pré-liaisons, destinée à recevoir au moins une peau pour former un panneau à forte résistance mécanique et à très forte résistance au délaminage.

L'objet de l'invention est également une âme ainsi obtenue par le procédé et un panneau réalisé à partir de cette âme ainsi que le dispositif pour y parvenir.

L'invention est maintenant décrite en détail suivant un mode de réalisation particulier, non limitatif, en regard des dessins qui représentent :
- figures 1A à 1D : une vue d'un synoptique illustrant le procédé mis en oeuvre selon la présente invention pour la fabrication d'une âme avec renfort de fils,
- figures 2A et 2B: deux vues de deux panneaux réalisés à partir d'une âme obtenue par le procédé,

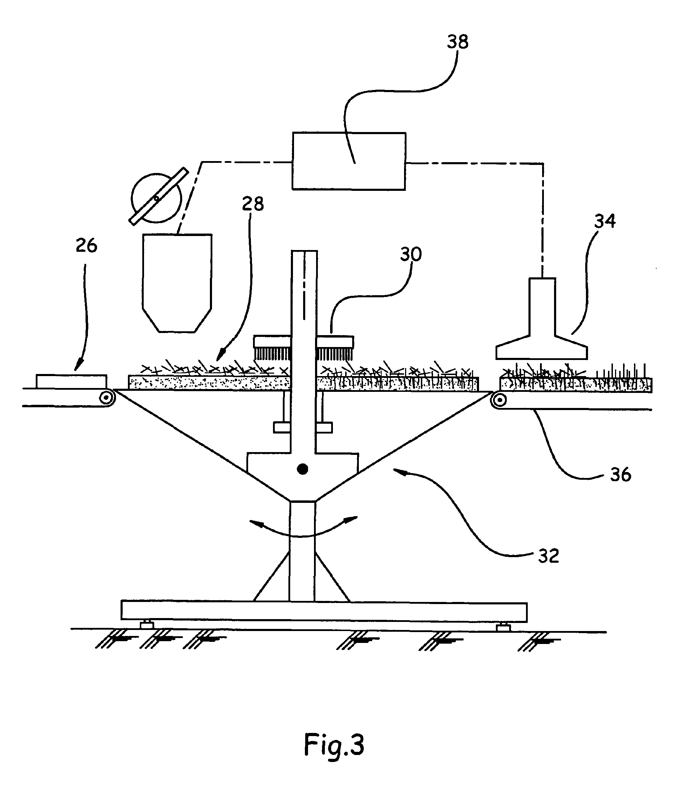

- figure 3 : une vue schématique du dispositif permettant de réaliser l'âme selon la présente invention.

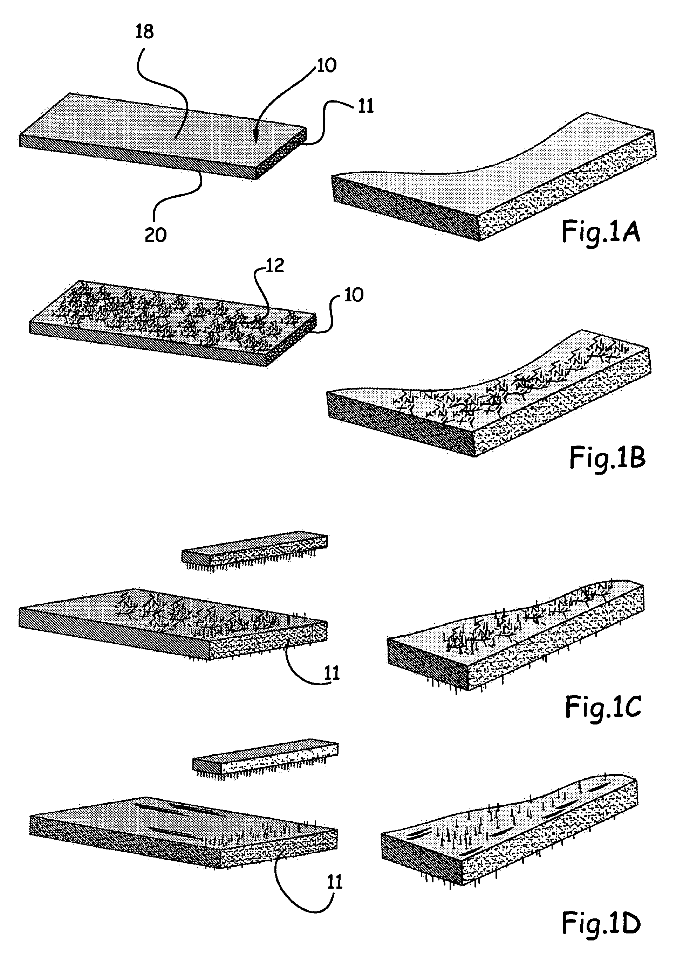

Le procédé selon la présente invention est décrit en regard du synoptique de la figure 1. Ce procédé consiste dans l'étape A, à disposer d'un pain 10 en matériau léger, par exemple une mousse rigide d'une densité de 30 kg/m³ pour donner un ordre d'idée, qui constitue une âme 11. Ce pain de matériau léger est, de façon connue, une plaque de forme parallélépipédique, de quelques centimètres de hauteur, pour donner un exemple simple. On entend par plaque une plaque monolithique ou une plaque reconstituée, mono matière ou multi matières.

Cette âme 11 reçoit ensuite au cours de l'étape B, au moins un type de fibres 12 de pontage sur au moins une face, en l'occurrence, sur la face supérieure de l'âme. Ces fibres sont déposées à la surface sans aucun élément de liaison.

On appelle "fibre" pour la suite de la description, indifféremment, des fibres mono filament, des fibres multi filaments ou encore des fils.

On parle pour la suite de la description d'un seul type de fibres de pontage mais il peut y en avoir de différents types simultanément.

Ces fibres 12 sont par exemple issues d'une coupe multiple de fils continus de façon à générer des fibres de longueur adaptée. Il existe des coupeurs permettant de fabriquer ces tronçons de fibres in situ.

Ces fibres 12 sont déposées sur la face en quantité au moins égale aux besoins de pontage. En l'occurrence, ces fibres sont déposées en quantité supérieure.

Ces fibres sont adoptées au pontage et peuvent être choisies, par exemple, parmi des fils sous forme de faisceaux de filaments de faible titrage 6 à 30 *µ*m, faisceaux qui sont des fils de fort titrage de 30 à 10 000 tex.

Lesdits filaments sont liés de façon que la coupe de ce fil laisse liées les extrémités des filaments.

Le fil de pontage peut être réalisé par guipage dudit faisceau de filaments à l'aide d'un fil de liaison de même nature ou de nature différente du matériau constituant les filaments du faisceau, avec un enroulement en hélice par exemple de ce fil de liaison autour dudit faisceau.

Ce fil guipé présente des avantages importants, notamment celui de contrôler la quantité de fibres introduites et celui d'améliorer la migration de la résine lors de son utilisation pour la réalisation de panneaux comme il sera expliqué ci-après. De plus, un tel fil guipé permet la réalisation de fils de pontage de qualité.

Lors de l'étape C, il est prévu de faire pénétrer les fibres 12 de pontage, de façon traversante ou partiellement traversante à travers l'âme.

Un moyen connu et acceptable industriellement pour la fabrication de tels produits est l'aiguilletage.

L'aiguilletage consiste à faire pénétrer des aiguilles à travers l'âme 11. Chaque aiguille comprend une extrémité de profil adapté pour assurer l'entraînement des fils de pontage dans le sens d'introduction de l'aiguille et pour retirer l'aiguille sans entraîner les fils.

Il est aussi prévu que les fils pénètrent partiellement dans l'âme ou totalement à travers l'âme, donc en étant traversants.

Ces fils peuvent être introduits perpendiculairement par rapport au plan constitué par la face 18 de l'âme 11 sur laquelle sont rapportées les fibres 12 de pontage mais ces fibres peuvent être introduites de façon oblique par rapport à cette face 18, l'angle pouvant être positif ou négatif ou une partie avec un angle positif et une autre partie avec un angle négatif au sein d'une même âme.

L'angle varie notamment et couramment entre 45° et 90°.

On conçoit que les fils de pontage peuvent aussi être introduits selon un motif prédéterminé.

Une fois qu'une partie des fibres de pontage est intégrée dans l'âme, l'excès de fibres de pontage est retiré, figure 1D.

On obtient ainsi une âme avec des fibres de pontage apparentes sur au moins une face et au moins partiellement intégrés dans l'âme.

Selon une variante, il est aussi possible de prévoir un retournement de la plaque pour atteindre la seconde face 20 qui se trouve orientée vers le haut, de déposer des fibres de pontage en excès, comme sur la face 18.

Ces fibres sont à leur tour aiguilletées pour être partiellement intégrées dans l'épaisseur de l'âme 11 ou traversantes.

Une fois les fibres concernées aiguilletées, l'excédant non aiguilleté est retiré de l'âme. Dans ce cas, les fibres sont traversantes des deux côtés et partiellement intégrées des deux côtés.

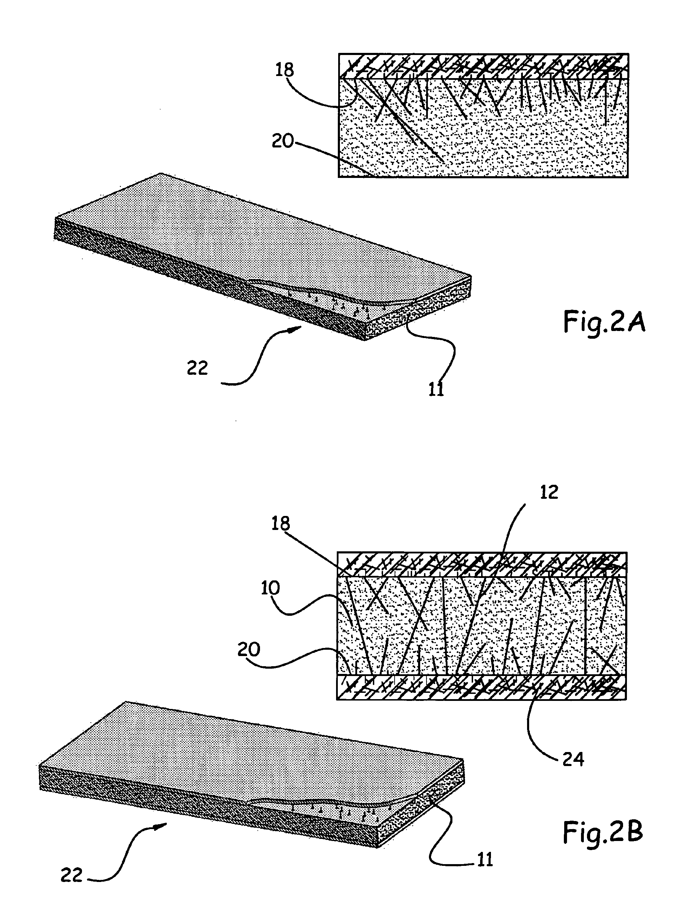

De la même façon, sans aucune différence, les mises en place des fibres, les aiguilletages et les retraits des excédents sur chaque face peuvent être réalisés simultanément sur les deux faces. Les fibres de la face orientée vers le bas sont alors maintenues temporairement durant l'aiguilletage par un voile par exemple. De façon à simplifier la description qui va suivre, l'exemple retenu couvre un mode de réalisation selon lequel on dispose d'une âme 10 avec des fibres de pontage qui traversent complètement l'âme, issues de chacune des deux faces et qui sont apparentes sur les deux faces 18 et 20 de l'âme 10 voir figure 2B. Néanmoins, un autre exemple avec une couche de fibres sur une seule face est représenté sur la figure 2A, les fibres 12 de pontage étant traversantes et partiellement intégrées dans l'âme.

De même, on choisit un fil de pontage d'un seul type dans cet exemple.

L'âme 11 ainsi obtenue, avec des fibres de pontage intégrées, est prête pour la réalisation d'un panneau 22.

Un tel panneau reçoit une nappe de fibres 24 de peau sur chaque face 18,20.

Selon un premier mode de réalisation, cette nappe de fibres 24 de peau est fabriquée préalablement et déposée sur chaque face, le sandwich constitué des trois couches étant alors placé dans un moule au sein duquel de la résine est infusée par plusieurs entrées pour permettre une bonne répartition sur toute la surface du panneau.

Le moule est généralement chauffant pour assurer la polymérisation de la résine plus rapidement.

On peut bien sûr utiliser d'autres techniques comme celle des fibres pré imprégnées de résine qu'il convient de porter en température pour assurer la bonne diffusion dans un premier temps et la polymérisation dans un second temps.

Le choix de la technique n'est pas un point crucial et dépend des applications envisagées et du matériel à disposition.

Selon un second mode de réalisation, les fibres 24 de peau sont déposées sur les deux faces et maintenues en place par un voile qui assure également un excellent état de surface final après démoulage.

Les extrémités en saillie des fibres de pontage se trouvent, dans la première ou la seconde variante, prises au sein de la couche de fibres 24 de peau.

La résine dans les deux cas se répartit et migre au sein des fibres de peau mais migre également dans les fibres de pontage qu'elle mouille aussi, réalisant ainsi des ponts composite fibre/résine entre les fibres de peau des deux faces.

Les fibres de peau sont choisies en fonction des performances mécaniques, de l'état de surface à obtenir, de la qualité de migration de la résine tandis que les fibres de pontage sont choisies en fonction de leur aptitude à être aiguilletées, de leur résistance mécanique, de leur aptitude à être coupées, de leur aptitude à permettre la juste migration de la résine.

On obtient, dans le mode de réalisation retenu qui vient d'être décrit à titre d'exemple, un panneau avec une âme, deux peaux, une de part et d'autre de ladite âme et des ponts entre les deux peaux.

Le panneau ainsi obtenu est particulièrement intéressant car il est totalement optimisé en fonction de l'application.

On note aussi que le procédé de fabrication selon la présente invention est avantageux en terme de gestion des âmes car à partir d'un même type d'âme, le fabricant de panneaux peut associer différents types de fibres pour la peau voire des combinaisons de différents types de fibres.

Ces fibres de peau peuvent également subir un aiguilletage superficiel uniquement avec l'âme, sans aucune performance mécanique, en attendant la mise en résine et la polymérisation.

Dans ce cas, cet aiguilletage n'a aucun rôle de pontage mais plutôt un rôle "d'agrafage".

Pour réaliser l'aiguilletage vertical des fibres de pontage sur l'âme selon la présente invention, il est prévu un dispositif qui comprend :
- un poste 26 d'alimentation en pain 10 de matériau léger,
- un poste 28 de dépose des fibres de pontage sur chaque pain,
- un poste 30 d'aiguilletage,
- un poste 32 d'orientation angulaire du poste d'alimentation en pains par rapport au poste d'aiguilletage,
- un poste 34 d'élimination des fibres non aiguilletées, pour autant qu'il y en ait,
- un poste 36 d'évacuation des âmes 11 obtenues avec fibres de pontage intégrées.

Ainsi il est possible d'obtenir un aiguilletage avec une inclinaison de part et d'autre de l'axe vertical, en fonction des besoins.

Ainsi, les fibres 12 inclinées travaillent parfaitement en reprise des efforts notamment lorsque le panneau réalisé avec ces âmes est soumis à une flexion et les fibres verticales travaillent parfaitement en supprimant les risques de délaminage. Bien entendu, les efforts étant souvent combinés, toutes les fibres de pontage sont soumises à des efforts.

Le poste d'alimentation comprend un double tapis mobile disposé de part et d'autre du poste d'aiguilletage.

Le poste de dépose des fibres comprend un coupeur qui assure la coupe du fil pour constituer des fibres de pontage.

Le procédé selon la présente invention permet de proposer une âme 11 préparée pour les fabricants de panneaux avec la souplesse des combinaisons possibles de tous les éléments à savoir : la nature du pain en matériau léger, la nature du type ou des types de fibres de pontage et la nature du type ou des types de fibres de peau.

On constate aussi qu'il est ainsi possible de déterminer avec grande précision la quantité de fibres de pontage et la quantité de fibres de peau.

La densité des ponts peut aussi être choisie et appliquée si bien que l'on peut faire varier cette densité de quelques ponts au m² à quelques ponts au cm².

De même la géométrie d'implantation des ponts peut être maîtrisée avec une répartition par exemple en quinconce.

On comprend dès lors que le procédé de réalisation d'une âme selon le procédé de l'invention permet toutes les combinaisons pour la fabrication d'un panneau.

De fait, l'adaptation juste aux besoins évite les sur-renforts, les consommations inutiles de matière première, les surpoids des panneaux finis qu'il faut ensuite par exemple transporter pendant des millions de kilomètres sur le camion qui en est équipé.

Au final, cette limitation des matières premières permet aussi de réduire les coûts et les quantités de matière à recycler en fin de vie.

## Revendications

1. Procédé de réalisation d'une âme (11) avec des fibres (12) de pontage, intégrées, pour la fabrication de panneaux composites, **caractérisé en ce qu'**il consiste à réaliser les étapes suivantes :
- disposer d'un pain (10) en matériau léger,
- déposer des fibres (12) de pontage en excès sur au moins une face (18,20) du pain (10),
- faire pénétrer une partie de ces fibres (12) de pontage dans l'âme,
- retirer l'excès de fibres (12) de pontage non utilisées.

2. Procédé de réalisation d'une âme (11) avec des fibres (12) de pontage selon la revendication 1, **caractérisé en ce que** l'on utilise l'aiguilletage pour faire pénétrer les fibres (12) de pontage dans le pain (10).

3. Procédé de réalisation d'une âme (11) avec des fibres (12) de pontage selon l'une quelconque des revendications précédentes, **caractérisé en ce que** la pénétration des fibres (12) de pontage est traversante de façon que chaque fibre (12) de pontage soit accessible de part et d'autre de l'âme.

4. Procédé de réalisation d'une âme (11) avec des fibres (12) de pontage selon l'une quelconque des revendications précédentes, **caractérisé en ce que** les fibres (12) de pontage sont de différents types.

5. Procédé de réalisation d'une âme (11) avec des fibres (12) de pontage selon l'une quelconque des revendications 1 à 4, **caractérisé en ce que** les fibres (12) de pontage sont des tronçons de fils constitués de faisceaux de filaments guipés.

6. Procédé de réalisation d'une âme (11) avec des fibres (12) de pontage selon l'une quelconque des revendications 1 à 6, **caractérisé en ce que** les fibres (12) de pontage sont introduites avec une inclinaison par rapport aux faces du pain (10) de matériau léger.

7. Âme (11) obtenue par la mise en oeuvre du procédé selon l'une des revendications précédentes, **caractérisée en ce qu'**elle comprend uniquement un pain (10) de matériau léger et des fibres (12) de pontage ayant pénétré dans ledit pain, au moins une partie des fibres ayant pénétré étant débouchante sur au moins une face dudit pain (10).

8. Âme (11) selon la revendication 7, **caractérisée en ce que** la densité des fibres (12) de pontage par unité de surface est contrôlée.

9. Âme (11) selon la revendication 7 ou 8, **caractérisée en ce que** la géométrie de répartition des fibres (12) de pontage par unité de surface est contrôlée.

10. Panneau (22) de matériau composite constitué d'une âme (11) réalisée par l'utilisation d'une âme selon l'une des revendications 7 à 9, **caractérisé en ce qu'**il comprend au moins des fibres (24) de peau noyées dans une matrice de résine, rapportée sur ladite âme (11), ladite résine ayant pénétré également dans les fibres (12) de pontage.

11. Panneau (22) selon la revendication 10, **caractérisé en ce que** les extrémités des fibres (12) de pontage sont noyées dans la matrice de résine avec les fibres (24) de peau.

12. Panneau (22) selon la revendication 10 ou 11, **caractérisé en ce que** les fibres (12) de pontage sont inclinées par rapport au plan de l'âme.

13. Dispositif de fabrication d'une âme selon l'une des revendications 10, 11 ou 12, **caractérisé en ce qu'**il comprend :
- un poste (26) d'alimentation en pains (10) de matériau léger,
- un poste (28) de dépose des fibres de pontage sur chaque âme,
- un poste (30) d'aiguilletage,
- un poste (32) d'orientation angulaire du poste (26) d'alimentation en pains par rapport au poste d'aiguilletage,
- un poste (36) d'évacuation des âmes (11) avec fibres de pontage intégrées.

14. Dispositif de fabrication d'une âme selon la revendication 13, **caractérisé en ce qu'**il comprend :
- un poste (26) d'alimentation en pain (10) de matériau léger,
- un poste (28) de dépose des fibres de pontage sur chaque pain,
- un poste (30) d'aiguilletage,
- un poste (32) d'orientation angulaire du poste d'alimentation en pains par rapport au poste d'aiguilletage,
- un poste (34) d'élimination des fibres non aiguilletées,
- un poste (36) d'évacuation des âmes (11) obtenues avec fibres de pontage intégrées.

## Patentansprüche

1. Verfahren zur Herstellung eines Kerns (11) mit integrierten Verbindungsfasern (12) für die Herstellung von Verbundplatten, **dadurch gekennzeichnet, dass** dieses darin besteht, die folgenden Verfahrensschritte durchzuführen:
- Bereitstellen eines Blocks (10) aus leichtem Material,
- Aufbringen von Verbindungsfasern (12) im Überschuss auf wenigstens eine Seite (18, 20) des Blocks (10),
- Veranlassen, dass ein Teil dieser Verbindungsfasern (12) in den Kern eindringt,
- Entfernen des Überschusses an nicht verwendeten Verbindungsfasern (12).

2. Verfahren zur Herstellung eines Kerns (11) mit Verbindungsfasern (12) nach Anspruch 1, **dadurch gekennzeichnet, dass** eine Vernadelung verwendet wird, um die Verbindungsfaser (12) in den Block (10) eindringen zu lassen.

3. Verfahren zur Herstellung eines Kerns (11) mit Verbindungsfasern (12) nach einem der vorhergehenden Ansprüche, **dadurch gekennzeichnet, dass** das Eindringen der Verbindungsfasern (12) auf durchquerende Weise erfolgt, so dass jede Verbindungsfaser (12) auf beiden Seiten des Kerns zugänglich ist.

4. Verfahren zur Herstellung eines Kerns (11) mit Verbindungsfasern (12) nach einem der vorhergehenden Ansprüche, **dadurch gekennzeichnet, dass** die Verbindungsfasern (12) von verschiedenen Typen sind.

5. Verfahren zur Herstellung eines Kerns (11) mit Verbindungsfasern (12) nach einem der Ansprüche 1 bis 4, **dadurch gekennzeichnet, dass** die Verbindungsfasern (12) Fadenabschnitte sind, die aus Bündeln von umsponnenen Fädchen bestehen.

6. Verfahren zur Herstellung eines Kerns (11) mit Verbindungsfasern (12) nach einem der Ansprüche 1 bis 6, **dadurch gekennzeichnet, dass** die Verbindungsfasern (12) bezüglich den Seiten des Blocks (10) aus leichtem Material geneigt eingebracht werden.

7. Kern (11), der durch die Ausführung eines Verfahrens nach einem der vorhergehenden Ansprüche hergestellt worden ist, **dadurch gekennzeichnet, dass** dieser nur einen Block (10) aus leichtem Material und in den Block eingebrachte Verbindungsfasern (12) aufweist, wobei wenigstens ein Teil der eingebrachten Fasern auf wenigstens einer Seite des Blocks (10) endet.

8. Kern (11) nach Anspruch 7, **dadurch gekennzeichnet, dass** die Dichte der Verbindungsfasern (12) pro Oberflächeneinheit gesteuert ist.

9. Kern (11) nach Anspruch 7 oder 8, **dadurch gekennzeichnet, dass** die Verteilungsgeometrie der Verbindungsfasern (12) pro Oberflächeneinheit gesteuert ist.

10. Platte (22) aus Verbundmaterial, mit einem Kern (11), der durch die Verwendung eines Kerns nach einem der Ansprüche 7 bis 9 bewerkstelligt worden ist, **dadurch gekennzeichnet, dass** diese Platte Hüllfasern (24) aufweist, die in eine Harzmatrix eingebettet sind, die auf den Kern (11) aufgebracht ist, wobei das Harz in gleicher Weise in die Verbindungsfasern (12) eingedrungen ist.

11. Platte (22) nach Anspruch 10, **dadurch gekennzeichnet, dass** die Enden der Verbindungsfasern (12) mit den Hüllfasern (24) in die Harzmatrix eingebettet sind.

12. Platte (22) nach Anspruch 10 oder 11, **dadurch gekennzeichnet, dass** die Verbindungsfasern (12) bezüglich der Ebene des Kerns geneigt sind.

13. Vorrichtung zur Herstellung eines Kerns nach einem der Ansprüche 10, 11 oder 12, **dadurch gekennzeichnet, dass** diese umfasst:
- eine Einrichtung (26) für die Zufuhr der Blöcke (10) aus leichtem Material,
- eine Einrichtung (28) zum Ablegen der Verbindungsfasern auf jedem Kern,
- eine Einrichtung (30) für die Vernadelung,
- eine Einrichtung (32) für die Winkelausrichtung der Einrichtung (26) für die Zufuhr der Blöcke bezüglich der Einrichtung für die Vernadelung,
- eine Einrichtung (36) zum Entfernen der Kerne (11) mit integrierten Verbindungsfasern.

14. Vorrichtung für die Herstellung eines Kerns nach Anspruch 13, **dadurch gekennzeichnet, dass** diese umfasst:
- eine Einrichtung (26) zum Zuführen eines Blocks (10) aus leichtem Material,
- eine Einrichtung (28) zur Ablage von Verbindungsfasern auf jeden Block,
- eine Einrichtung (30) zum Vernadeln,
- eine Einrichtung (32) für die Winkelausrichtung der Einrichtung zum Zuführen von Blöcken bezüglich der Einrichtung zum Vernadeln,
- eine Einrichtung (34) zum Entfernen von nicht vernadelten Fasern,
- eine Einrichtung (36) zum Entfernen der hergestellten Kerne (11) mit integrierten Verbindungsfasern.

## Claims

1. A method for producing a core (11) with integrated bridging fibres (12), for manufacturing composite panels, **characterised in that** it comprises performing the following steps:
- providing a slab (10) of lightweight material,
- depositing bridging fibres (12) in excess on at least one face (18, 20) of the slab (10),
- making some of these bridging fibres (12) penetrate the core,
- removing the unused excess bridging fibres (12).

2. A method for producing a core (11) with bridging fibres (12) according to claim 1, **characterised in that** needlepunching is used to make the bridging fibres (12) penetrate the slab (10).

3. A method for producing a core (11) with bridging fibres (12) according to either of the preceding claims, **characterised in that** the penetration of the bridging fibres (12) goes right through so that each bridging fibre (12) is accessible on either side of the core.

4. A method for producing a core (11) with bridging fibres (12) according to any one of the preceding claims, **characterised in that** the bridging fibres (12) are of different types.

5. A method for producing a core (11) with bridging fibres (12) according to any one of claims 1 to 4, **characterised in that** the bridging fibres (12) are portions of threads comprising clusters of covered filaments.

6. A method for producing a core (11) with bridging fibres (12) according to any one of claims 1 to 6, **characterised in that** the bridging fibres (12) are introduced with an inclination with respect to the faces of the slab (10) of lightweight material.

7. A core (11) obtained by implementing the method according to one of the preceding claims, **characterised in that** it comprises only one slab (10) of lightweight material and bridging fibres (12) that have penetrated said slab, at least some of the fibres that have penetrated emerging on at least one face of said slab (10).

8. A core (11) according to claim 7, **characterised in that** the density of the bridging fibres (12) per unit surface area is controlled.

9. A core (11) according to claim 7 or 8, **characterised in that** the geometry of distribution of the bridging fibres (12) per unit surface area is controlled.

10. A panel (22) of composite material comprising a core (11) produced by using a core according to one of claims 7 to 9, **characterised in that** it comprises at least skin fibres (24) embedded in a resin matrix, attached to said core (11), said resin also having penetrated the bridging fibres (12).

11. A panel (22) according to claim 10, **characterised in that** the ends of the bridging fibres (12) are embedded in the resin matrix with the skin fibres (24).

12. A panel (22) according to claim 10 or 11, **characterised in that** the bridging fibres (12) are inclined with respect to the plane of the core.

13. A device for manufacturing a core according to one of claims 10, 11 or 12, **characterised in that** it comprises:
- a station (26) for supplying slabs (10) of lightweight material,
- a station (28) for depositing bridging fibres on each core,
- a needlepunching station (30),
- a station (32) for angular orientation of the station (26) for supplying slabs with respect to the needlepunching station,
- a station (36) for discharging the cores (11) with integrated bridging fibres.

14. A device for manufacturing a core according to claim 13, **characterised in that** it comprises:
- a station (26) for supplying slabs (10) of lightweight material,
- a station (28) for depositing bridging fibres on each core,
- a needlepunching station (30),
- a station (32) for angular orientation of the station for supplying slabs with respect to the needlepunching station,
- a station (34) for eliminating the non-needlepunched fibres,
- a station (36) for discharging the cores (11) obtained with integrated bridging fibres.
